# FASCICULE DE BREVET EUROPEEN

(11) **EP 3 757 414 B1**
(45) Date de publication et mention de la délivrance du brevet: **28.08.2024**
(21) Numéro de dépôt: 20182315.0
(22) Date de dépôt: 25.06.2020
(51) Int. Cl.: F16D 21/06, F16D 25/10

(54) **DISPOSITIF DE TRANSMISSION DE COUPLE**
VORRICHTUNG ZUR DREHMOMENTÜBERTRAGUNG
TORQUE TRANSMISSION DEVICE

(30) Priorité: 28.06.2019 FR 1907127
(43) Date de publication de la demande: 30.12.2020
(73) Titulaire: VALEO EMBRAYAGES, 80009 Amiens (FR)
(72) Inventeur: LEBAS, Gilles, 98892 CERGY PONTOISE (FR); COMMEINE, Emmanuel, 95892 CERGY PONTOISE (FR)
(74) Mandataire: Valeo Powertrain Systems

(56) Documents cités:
- EP-A1- 3 252 335
- DE-A1- 102007 058 863
- DE-A1- 102012 223 251
- DE-A1- 102018 116 589
- FR-A1- 3 073 789

## Description

[La présente invention se rapporte au domaine des transmissions pour véhicules automobiles. Elle se rapporte notamment à dispositif de transmission de couple destiné à être disposé dans la chaine de traction d'un véhicule automobile, entre un moteur thermique et une boîte de vitesses.

L'invention concerne en particulier les dispositifs de transmission pour un véhicule automobile de type hybride dans lequel une machine électrique tournante est disposée dans la chaine de traction.

Il est connu de l'art antérieur des mécanismes à triple embrayage comportant un empilage de pièces comprises entre un appui fixe coté boite de vitesse et un appui fixe côté dispositif d'amortissement ou moteur thermique. Le triple embrayage comprend en particulier un mécanisme à double embrayage humide pour un véhicule automobile, comprenant des moyens d'entrée de couple, un premier arbre de sortie de couple, un second arbre de sortie de couple, un premier embrayage apte à coupler ou découpler les moyens d'entrée de couple et le premier arbre de sortie de couple, un deuxième embrayage apte à coupler ou découpler les moyens d'entrée de couple et le second arbre de sortie de couple. Un tel mécanisme à double embrayage est par exemple décrit dans la demande de brevet EP 2905492. Dans ce cas, le premier et deuxième embrayage de type multidisques, sont disposés radialement l'un au-dessus de l'autre. Chacun des embrayages multidisques comportent des flasques liés en rotation à un porte-disque d'entrée formant le moyen d'entrée de couple et des disques de friction liés en rotation à des porte-disques de sortie. Des paliers axiaux sont disposés entre le porte-disque d'entrée de couple et les portes-disques de sortie.

D'autres dispositifs de transmission du couple sont également connus de FR3073789A1, DE102012223251A1 et DE102018116589A1.

Cet empilage de pièces doit être monté avec un jeu maitrisé (environ 0,2 à 0,3 mm) afin d'éviter des déplacements trop importants de ces dernières lors des changements de sens de couple dans la boîte de vitesses. Ces déplacements peuvent engendrer en particulier du bruit, des chocs, des incertitudes de commande d'embrayage.

Lors des changements de sens de couple, des efforts de dentures apparaissent dans les arbres de boites. Ces efforts sont dus au passage de couple dans les engrenages hélicoïdaux. De plus, lors des changements de rapport de boite de vitesses, les arbres de sortie de couple se déplacent axialement en raison d'efforts axiaux présents au sein de la boite de vitesses. Les porte-disques de sortie sont liés en rotation aux arbres de sortie de couple par l'intermédiaire de cannelures. Cette liaison cannelée a pour effet, durant les phases de transmission de couple, de solidariser axialement les arbres avec les porte-disques. Le mouvement axial des arbres de boite de vitesses entraine un déplacement des porte-disques de sortie au sein du mécanisme d'embrayage.

Du fait de la géométrie des dents de l'engrenage, l'effort dans l'engrenage peut se décomposer en trois composantes comme suit :
- Ft - tangentielle qui permet de passer le couple,
- Fr - radiale due à l'angle de pression, et
- Fa - axiale due à l'angle d'hélice.

L'effort tangentiel Ft peut être positif ou négatif suivant le sens du couple.

L'effort radial Fr est toujours dirigé vers l'axe de l'engrenage quel que soit le sens du couple. Il est aussi appelé effort de séparation de denture car il tend à écarter les deux engrenages en contact lors du passage de couple.

L'effort axial Fa peut être positif ou négatif suivant le sens du couple et l'orientation de l'angle d'hélice. L'effort axial Fa tend à faire bouger les arbres de boites de vitesses car il exerce un effort sur les carters de de boite de vitesses par l'intermédiaires des roulements situés en interface entre l'arbre de de boite de vitesses et les carters de de boite de vitesses. Le déplacement est directement lié à la raideur des éléments soumis à Fa, que ce soit des raideurs de carter de boites de vitesses ou dispositif d'amortissement et/ou de triple embrayage.

Ce mouvement d'arbre est transmis au triple embrayage par l'intermédiaire du/des moyeux internes lors du passage de couple entre la cannelure et le moyeu par le frottement des dents de la cannelure male sur la femelle. Le déplacement se traduit dans le triple embrayage par un effort lorsqu'il rencontre la raideur du carter coté moteur thermique / dispositif d'amortissement.

Le déplacement peut être négatif (boite de vitesses vers moteur thermique) ou positif (moteur thermique vers boite de vitesses). Dans un cas, l'effort va permettre de compacter les pièces. Dans l'autre cas, un jeu pourra apparaître entre les différentes pièces de l'assemblage. Ce jeu peut être préjudiciable au positionnement et/ou à la tenue dans le temps des éléments du triple embrayage s'il est trop important.

Les paliers axiaux permettent alors de transférer les efforts axiaux au sein du mécanisme à triple/double embrayage tout en autorisant la rotation des porte-disques entre eux. Les paliers axiaux constitués de bagues tournantes et d'aiguilles sont alors sollicités en charge. Il en ressort que les paliers axiaux et leurs contreparties (qui permettent d'éviter un contact entre deux pièces tournants à des vitesses différentes) pourraient être endommagées si un jeu trop important apparaissait :
- par perte du contact ; lors du retour du contact, un choc pourrait endommager les éléments,
- par désynchronisation de la vitesse des deux pièces de part et d'autre. Lors de la resynchronisation, les aiguilles du palier axial ne tournent plus à la même vitesse que l'une ou l'autre des deux pièces. Elles vont subir une forte accélération avec une possible perte d'adhérence. La perte d'adhérence peut générer une usure et du bruit.

Afin de permettre un fonctionnement optimal, plus précisément d'optimiser/réduire le couple de trainée, réduire la tolérance sur la chaine de cote, optimiser les courses d'actionnement, réduire in fine le packaging de l'embrayage, un calage interne de l'ensemble est nécessaire afin d'éviter autant que possible les décollages de pièces.

L'invention a notamment pour but d'apporter une solution simple, efficace et économique à ce problème.

L'invention y parvient, selon l'un de ses aspects, à l'aide d'un dispositif de transmission de couple, notamment pour véhicule automobile, selon la revendication 1.

Ce dispositif présente ainsi l'avantage grâce à l'au moins un élément de calage axial disposé en contact avec l'une des faces frontales d'un palier axial de permettre de protéger l'ensemble des paliers axiaux par le comblement du jeu interne.

Ainsi, par élément de calage axial, on entend définir toute pièce utilisée pour caler axialement un ensemble en comblant le jeu.

Dans la suite de la description et les revendications, on utilisera à titre non limitatif et afin d'en faciliter la compréhension, les termes « avant » AV ou « arrière » AR selon la direction par rapport à une orientation axiale déterminée par l'axe X principal de rotation de la transmission du véhicule automobile « l'avant » désignant la partie située à gauche des figures, du côté du moteur, et « l'arrière » désignant la partie droite des figures, du côté de la transmission; et « intérieur /interne » ou « extérieur / externe » par rapport à l'axe X et suivant une orientation radiale, orthogonale à ladite orientation axiale, « l'intérieur » désignant une partie proximale de l'axe longitudinal X et « l'extérieur » désignant une partie distale de l'axe longitudinal X.

Au sens de la présente invention, une face frontale d'un palier axial est une face qui définit axialement une extrémité de ce palier. Le palier axial permet de ne pas avoir d'hystérésis entre les pièces en rotation.

Avantageusement, l'élément de calage axial présente une forme générale de disque annulaire, telle qu'une rondelle. De préférence, l'élément de calage axial est une pièce métallique qui permet de combler le jeu pour arriver à une côte finale qui doit être celle attendue.

Avantageusement, l'au moins un palier axial est une butée à aiguilles.

De préférence, le dispositif comprend quatre paliers axiaux.

Avantageusement les quatre paliers axiaux sont disposés dans des épaulements de l'élément d'entrée de couple, du premier élément de sortie de couple et du deuxième élément de sortie de couple. De préférence, les quatre paliers axiaux sont disposés sur une même hauteur radiale.

Selon l'invention, le dispositif comprend en outre un carter de protection agencé pour envelopper au moins partiellement l'élément d'entrée de couple, le premier et deuxième élément de sortie de couple, l'embrayage d'entrée et les embrayages de sortie, ledit carter comportant une paroi interne s'étendant axialement autour de l'axe X et comprenant un réseau de passage de fluide. Le réseau de passage de fluide est destiné à alimenter un système d'actionnement de l'embrayage d'entrée. Ainsi, le fluide est dirigé vers l'embrayage d'entrée à partir du carter et non des arbres de boites.

Avantageusement, l'au moins un élément de calage axial chevauche radialement la paroi interne. Par « chevauchement radial », on entend au sens de la présente invention deux pièces qui s'étendent sur une même hauteur radiale.

Selon l'invention, le dispositif comprend un élément de calage axial disposé axialement entre une extrémité arrière de la paroi interne du carter et une extrémité avant du moyeu principal.

Selon l'invention, un palier axial est interposé axialement entre la paroi interne du carter de protection et l'élément d'entrée de couple, un élément de calage axial étant interposé axialement entre la paroi interne du carter de protection ou l'élément d'entrée de couple d'une part et une face frontale dudit palier axial d'autre part.

Avantageusement, un palier axial est interposé axialement entre l'élément d'entrée de couple et le premier élément de sortie de couple, un élément de calage axial étant interposé axialement entre l'élément d'entrée de couple ou le premier élément de sortie de couple d'une part et une face frontale dudit palier axial d'autre part.

Avantageusement, un palier axial est interposé axialement entre le premier et deuxième élément de sortie de couple, un élément de calage axial étant interposé axialement entre le premier ou deuxième élément de sortie de couple d'une part et une face frontale dudit palier axial d'autre part.

Avantageusement, un palier axial est interposé axialement entre le deuxième élément de sortie de couple et le moyeu principal, un élément de calage axial étant interposé axialement entre le deuxième élément de sortie de couple ou le moyeu principal d'une part et une face frontale dudit palier axial d'autre part.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.
[Fig. 1] représente une vue en coupe axiale d'un dispositif de transmission de couple selon l'invention.
[Fig. 2] représente un agrandissement de la partie basse du dispositif présentée à la figure 1.

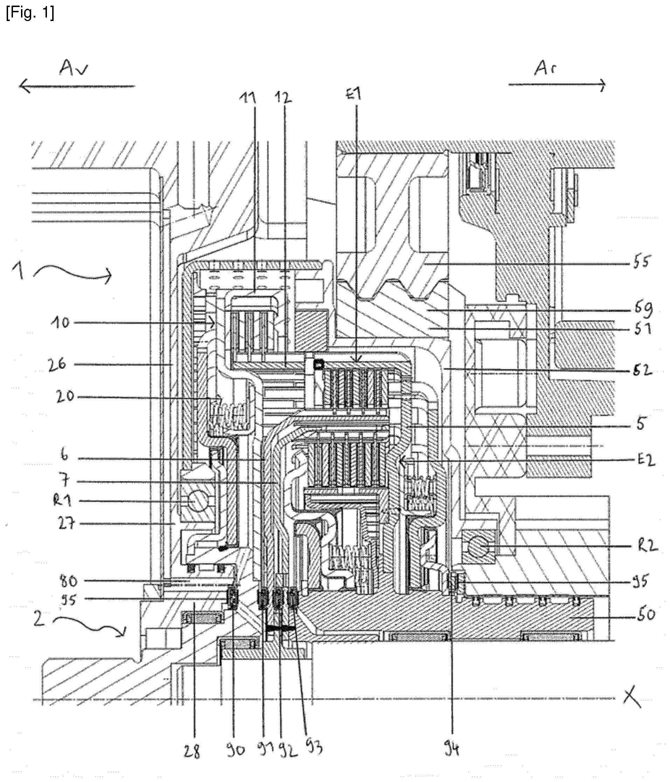

En relation avec la figure 1, on observe un dispositif de transmission de couple 1 comprenant :
- un élément d'entrée de couple 2 en rotation autour d'un axe X, apte à être couplé en rotation à un vilebrequin d'un moteur thermique (non représenté mais situé à l'avant du dispositif 1 de transmission de couple),
- un premier élément de sortie de couple 6, apte à être couplé en rotation à un premier arbre d'entrée d'une boîte de vitesses (non représenté mais situé à l'arrière du dispositif 1 de transmission de couple),
- un deuxième élément de sortie de couple 7, apte à être couplé en rotation à un deuxième arbre d'entrée d'une boîte de vitesses (non représenté) et
- un porte-disque d'entrée 5 disposé entre l'élément d'entrée de couple 2 et le premier et deuxième élément de sortie de couple 6, 7 au sens de la transmission de couple.

Dans l'exemple considéré, le premier élément de sortie 6 est disposé en parallèle du deuxième élément de sortie 7 au sens de la transmission de couple. Chacun de ces éléments tourne autour d'un axe de rotation X du dispositif.

Le premier et deuxième élément de sortie 6, 7 comprennent des interfaces de sortie dont la périphérie interne est cannelée et apte à coopérer, respectivement avec un premier et un deuxième arbre de boite de vitesses.

Un dispositif d'amortisseur de torsion (non représenté) peut être positionné entre le vilebrequin du moteur thermique et l'élément d'entrée de couple 2.

Dans l'exemple considéré, le dispositif comprend en outre un embrayage d'entrée 10 accouplant sélectivement et par friction l'élément d'entré de couple 2 et le porte-disque d'entrée 5 au sens de la transmission de couple. Ainsi, l'embrayage d'entrée 10 comprend :
- un porte-disque d'entrée 11 solidaire en rotation du premier élément d'entrée de couple 2 par l'intermédiaire d'un voile d'entrée 15,
- un porte-disque de sortie 12 solidaire en rotation du porte-disque d'entrée 5, et
- un ensemble multidisque comprenant plusieurs disques de friction, ici trois, solidaires en rotation du porte-disque de sortie 12, plusieurs plateaux respectivement disposés de part et d'autre de chaque disque de friction, solidaires en rotation du porte-disque d'entrée 11 et des garnitures de friction disposées entre les plateaux et un disque de friction, fixées de chaque côté des disques de friction, l'embrayage 10 décrivant une position débrayée et une position embrayée dans laquelle lesdits plateaux et le disque de friction pincent les garnitures de friction de manière à transmettre un couple entre le porte-disque d'entrée et le porte-disque de sortie.

Chaque porte-disque 11, 12 synchronise en rotation l'ensemble des plateaux et l'ensemble des disques de friction. Chaque portes-disque 11, 12 comporte une jupe cylindrique sur lesquelles sont montées les plateaux et les disques de friction.

Les disques de friction de l'ensemble multidisque coopèrent avec la jupe cylindrique du porte-disque de sortie 12 selon leur périphérie radialement intérieure par cannelures. Les disques de friction sont donc radialement à l'extérieur de la jupe cylindrique.

Les plateaux de l'ensemble multidisque coopèrent avec la jupe cylindrique du porte-disque de d'entrée 11 selon leur périphérie radialement extérieure par cannelures. Les plateaux sont donc radialement à l'intérieur de la jupe cylindrique.

L'élément d'entrée de couple 2 permet l'agencement d'un système d'actionnement 20 associé à l'embrayage d'entrée 10.

Dans l'exemple considéré, le dispositif 1 comprend également un premier embrayage de sortie E1 accouplant sélectivement et par friction le porte-disque d'entrée 5 et le deuxième élément de sortie de couple 6 et un deuxième embrayage de sortie E2, accouplant sélectivement et par friction le porte-disque d'entrée 5 et le troisième élément de sortie de couple 7. Le porte-disque d'entrée 5 est ainsi un porte-disque d'entrée commun aux deux embrayages de sortie E1, E2.

De manière analogue à l'embrayage d'entrée 10, le premier embrayage de sortie E1 et le deuxième embrayage de sortie E2 comprennent :
- le porte-disque d'entrée 5 commun aux deux embrayages de sotie E1, E2,
- un porte-disque de sortie solidaire en rotation du premier élément de sortie 6 (pour l'embrayage E1) ou solidaire en rotation du deuxième élément de sortie 7 (pour l'embrayage E2) et,
- un ensemble multidisque comprenant plusieurs disques de friction, ici quatre (pour l'embrayage E1) et cinq (pour l'embrayage E2), solidaires en rotation du porte-disque de sortie, plusieurs plateaux respectivement disposés de part et d'autre de chaque disque de friction, solidaires en rotation du porte-disque d'entrée et des garnitures de friction disposées entre les plateaux et un disque de friction, fixées de chaque côté des disques de friction, les embrayages E1 et E2 décrivant une position débrayée et une position embrayée dans laquelle lesdits plateaux et le disque de friction pincent les garnitures de friction de manière à transmettre un couple entre le porte-disque d'entrée et le porte-disque de sortie.

De manière commune aux trois embrayages 10, E1 et E2, les garnitures peuvent être fixées sur les disques de friction, notamment par collage, notamment par rivetage, notamment par surmoulage. En variante, les garnitures sont fixées sur les plateaux.

Chaque porte-disque peut synchroniser en rotation l'ensemble des plateaux ou l'ensemble des disques de friction.

Selon un aspect de l'invention, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.

Les embrayages sont de type humide et comportent entre deux et sept disques de friction, de préférence quatre disques de friction. De tels embrayages multi-disques permettent de limiter la hauteur radiale de limiter l'étendue axiale.

Les embrayages de sortie E1, E2 peuvent être agencés pour ne pas être simultanément dans la même configuration embrayée. En revanche, ils peuvent simultanément être configurés dans leur position débrayée.

Le dispositif 1 comprend en outre un carter de protection 27. Ce carter 27 est agencé pour envelopper au moins partiellement l'élément d'entrée de couple 2, le premier et deuxième élément de sortie de couple 6, 7, l'embrayage d'entrée 10 et les embrayages de sortie E1, E2.

Le carter 27 est composé d'une paroi radiale 26 et d'une paroi interne 28 s'étendant axialement autour de l'axe X et présente une forme générale sensiblement en « L », la base du « L » étant située du côté de l'axe de rotation X. Le carter comprend un réseau de passage d'un fluide 80 agencé pour alimenter en fluide ledit système d'actionnement 20.

Avantageusement, le carter 27 peut-être fixé au moteur à combustion interne ou au moteur de la machine électrique par l'intermédiaire de moyens de fixation, par exemple de type vis ou rivet visibles.

Le dispositif comprend en outre, un moyeu principal 50 d'axe de rotation X. Le porte-disque d'entrée commun 5 aux embrayages de sortie E1 et E2 est solidairement fixement par soudure au moyeu principal 50.

Ainsi, le moyeu principal 50 supporte le premier et deuxième embrayage de sortie E1, E2 par l'intermédiaire du porte-disque d'entrée commun 5. Le moyeu principal 50 est donc couplé en rotation à l'élément d'entrée de couple 2. Lorsque l'élément d'entrée de couple 2 est couplé à un arbre moteur entrainé en rotation par le vilebrequin d'un moteur, tel que décrit précédemment, et que l'embrayage 10 est fermé, alors le moyeu principal 50 est animé d'un mouvement de rotation analogue à celui de l'arbre moteur.

Comme illustré sur la figure 1, le premier embrayage de sortie E1 est disposé radialement au-dessus du deuxième embrayage de sortie E2.

De préférence, l'embrayage d'entrée 10, le premier embrayage E1 et le deuxième embrayage E2 (ci-après « les embrayages ») sont à l'état ouvert, encore dit « normalement ouvert », et sont actionnés sélectivement en fonctionnement par un dispositif de commande (non représenté) pour passer de l'état ouvert à l'état fermé.

Les embrayages sont chacun commandés par un système d'actionnement agencé pour pouvoir configurer les embrayages dans une configuration quelconque comprise entre la configuration embrayée et la configuration débrayée.

Pour commander sélectivement le changement d'état des embrayages, le dispositif de commande gère l'alimentation en huile. Le dispositif de commande est raccordé au carter de protection 27 qui comprend le réseau de passage de fluide ainsi qu'au moyeu principal 50 qui comporte des canaux non visibles sur les plans de coupe de la figure 1.

Chaque système d'actionnement comprend :
- une chambre de pression agencée pour recevoir un fluide pressurisé,
- un piston mobile axialement à l'intérieur de la chambre de pression,
- une chambre d'équilibrage située à l'opposé de la chambre de pression par rapport au piston.

Chaque système d'actionnement comprend en outre un élément de rappel élastique, agencé pour générer un effort axial s'opposant au déplacement du piston correspondant pour embrayer l'embrayage 10, E1, E2 correspondant. Ceci permet de rappeler automatiquement le piston en position débrayée, correspondant à un état ouvert de l'embrayage. Dans cette position, le piston libère axialement l'ensemble multidisque correspondant qui ne transmet alors plus de couple en direction du premier arbre d'entrée d'une boite de vitesse ou du deuxième arbre d'entrée d'une boite de vitesses.

Chaque piston est disposé axialement entre une chambre de pression et une chambre d'équilibrage. Les pistons prennent la forme d'une tôle ondulée et sont incurvés axialement vers l'avant AV ou vers l'arrière AR. Des appuis extérieurs s'étendent parallèlement à l'axe longitudinal X.

À titre d'exemple non limitatif, les pistons peuvent être obtenus par emboutissage.

Les chambres de pression des systèmes d'actionnement sont agencées pour recevoir un certain volume de fluide hydraulique sous pression afin de générer un effort axial sur un piston et de configurer ainsi l'embrayage correspondant dans l'une des configurations décrites précédemment. La chambre de pression qui génère l'effort du piston est associée à une chambre d'équilibrage agencée pour recevoir un certain volume de fluide hydraulique. Le fluide, du type de lubrification ou de refroidissement est avantageusement acheminé par l'intermédiaire de conduits de circulation fluidiques basse pression (non représentées sur le plan de coupe).

A chaque système d'actionnement est associé un élément de rappel élastique. Avantageusement, l'élément de rappel élastique est une rondelle Belleville ou est composé de ressorts hélicoïdaux.

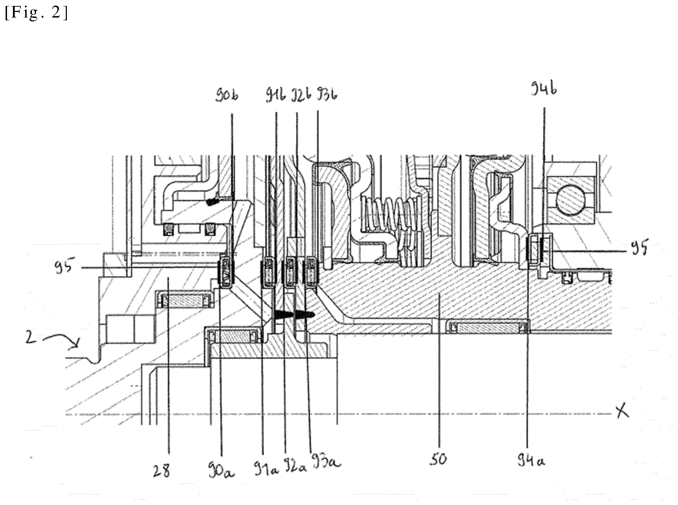

Comme on peut le voir sur la figure 1 et plus en détails à l'aide de la figure 2, le dispositif de transmission de couple comprend en outre cinq paliers axiaux 90, 91, 92, 93 et 94. Chaque palier axial présente deux faces frontales 95. Les paliers axiaux sont configurés pour supporter les efforts axiaux du dispositif 1.

Les quatre premiers paliers axiaux 90, 91, 92, 93 sont disposés dans des épaulements de l'élément d'entrée de couple 2, du premier élément de sortie de couple 6 et du deuxième élément de sortie de couple 7. Dans l'exemple considéré, les quatre premiers paliers axiaux 90, 91, 92, 93 se chevauchent radialement. Les quatre premiers paliers axiaux 90, 91, 92, 93 sont également disposés sur une même hauteur radiale.

De manière avantageuse, les positions des paliers axiaux sont les suivantes. Le premier palier axial 90 est interposé axialement entre la paroi interne 28 du carter de protection 27 et l'élément d'entrée de couple 2.

Le deuxième palier axial 91 est interposé entre l'élément d'entrée de couple 2 et l'élément de sortie 6 afin de supporter les efforts axiaux de l'élément d'entrée de couple 2 malgré les vitesses de rotation différentes auxquelles peuvent respectivement tourner l'arbre d'entrée et le premier arbre de transmission.

Le troisième palier axial 92 est intercalé axialement entre l'élément de sortie de couple 6 définissant le porte-disque de sortie de l'embrayage E1 et l'élément de sortie de couple 7 définissant le porte-disque de sortie de l'embrayage E2 afin de pouvoir transmettre une charge axiale entre les deux porte-disques de sortie qui peuvent tourner à des vitesses différentes lorsque les premier et deuxième embrayages E1, E2 sont configurés dans une configuration différente

Le quatrième palier axial 93 est interposé entre l'élément de sortie de couple 7 de l'embrayage E2 et le moyeu principal 50, de préférence l'extrémité avant du moyeu principal.

Enfin, le cinquième palier axial 94 est interposé entre le piston du premier embrayage de sortie E1 et un carter de boite de vitesses.

Avantageusement, les paliers 90, 91, 92, 93, 94 sont des paliers à roulement avec un premier et deuxième disque entre lesquels est disposée une pluralité de corps de roulement, de type butée à aiguilles.

Le dispositif comprend en outre au moins un élément de calage axial 90a, 90b, 91a, 91b, 92a, 92b, 93a, 93b, 94a, 94b en contact avec l'une des faces frontales 95 d'un palier axial 90, 91, 92, 93, 94.

Sur la figure sont représentées toutes les positions possibles des éléments de calage axial. Avantageusement, le dispositif 1 comprend un ou deux éléments de calage axial, de préférence un choisi parmi les éléments de calage axial 90a, 90b, 91a, 91b, 92a, 92b, 93a, 93b, 94a, 94b.

Dans l'exemple considéré, chaque élément de calage axial 90a, 90b, 91a, 91b, 92a, 92b, 93a, 93b, 94a, 94b chevauche radialement la paroi interne 28 du carter 27.

Avantageusement, le dispositif comprend un élément de calage axial 90a, 90b, 91a, 91b, 92a, 92b, 93a, 93b disposé axialement entre une extrémité arrière 28b de la paroi interne 28 du carter 27 et une extrémité avant 50a du moyeu principal 50.

De manière avantageuse les positions des éléments de calage axial sont les suivantes.

L'élément de calage axial 90a est interposé axialement entre la paroi interne 28 du carter de protection 27 et une face frontale 95 du palier axial 90.

L'élément de calage axial 90b est interposé axialement entre l'élément d'entrée de couple 2 et une face frontale 95 du palier axial 90.

L'élément de calage axial 91a est interposé axialement entre l'élément d'entrée de couple 2 et une face frontale 95 du palier axial 91.

L'élément de calage axial 91b est interposé axialement entre le premier élément de sortie de couple 6 et une face frontale du palier axial 91.

L'élément de calage axial 92a est interposé axialement entre le premier élément de sortie de couple 6 et une face frontale 95 du palier axial 92.

L'élément de calage axial 92b est interposé axialement entre le deuxième élément de sortie de couple 7 et une face frontale 95 du palier axial 92.

L'élément de calage axial 93a est interposé axialement entre le deuxième élément de sortie de couple 7 et une face frontale 95 du palier axial 93.

L'élément de calage axial 93b est interposé axialement entre le moyeu principal 50 et une face frontale 95 du palier axial 93.

Dans l'exemple considéré, le dispositif comprend également un grand pignon 59 en rotation autour d'un axe X relié sélectivement à l'élément d'entrée 2 par l'embrayage d'entrée 10 et un petit pignon 55 en rotation avec une machine électrique tournante (non visible sur la figure) autour d'un axe parallèle à l'axe de rotation X, le petit et grand pignon 59, 55 formant un engrenage.

En relation avec la figure 1 on constate que le grand pignon 59 comprend une roue dentée 51 et un support de la roue dentée 52. Dans ce cas, ces deux éléments sont monobloc, c'est à dire qu'ils forment plusieurs sous-éléments assemblés entre eux, par exemple par soudure. En variante, la roue dentée 51 et le support de la roue dentée 52 ne forment qu'une seule et même pièce.

La roue dentée 51 du grand pignon 59 présente une denture hélicoïdale de forme complémentaire au petit pignon 55 de la machine électrique tournante.

Dans les exemples considérés, le dispositif 1 de transmission de couple comprend en outre un premier organe de roulement R1 disposé radialement entre la paroi interne 28 du carter 27 et le support de la roue dentée 52 et un deuxième organe de roulement R2 disposé radialement entre le support de la roue dentée 52 et le moyeu principal 50.

## Revendications

1. Dispositif (1) de transmission de couple, notamment pour véhicule automobile, comprenant :
- un élément d'entrée de couple (2) en rotation autour d'un axe X, apte à être couplé en rotation à un vilebrequin d'un moteur thermique,
- un premier et un deuxième élément de sortie de couple (6, 7), aptes à être couplés respectivement en rotation à un premier et un deuxième arbre d'entrée d'une boite de vitesses,
- un premier et un deuxième embrayage de sortie (E1, E2) agencés entre l'élément d'entrée de couple (2) et les éléments de sortie de couple (6, 7) au sens de la transmission de couple,
- un porte disque d'entrée (5) commun aux deux embrayages de sortie (E1, E2),
- un embrayage d'entrée (10) accouplant sélectivement et par friction l'élément d'entrée de couple (2) et le porte-disque d'entrée (5),
- un moyeu principal (50),
- au moins un palier axial (90) présentant des faces frontales (95) configuré pour supporter les efforts axiaux du dispositif (1), **caractérisé en ce qu'**il comprend au moins un élément de calage axial (90a, 90b) en contact avec l'une des faces frontales (95) du palier axial (90), l'au moins un palier axial (90) étant :
- un palier axial (90) interposé axialement entre :
- une paroi interne (28) d'un carter de protection (27) agencé pour envelopper au moins partiellement l'élément d'entrée de couple (2), le premier et deuxième élément de sortie de couple (6, 7), l'embrayage d'entrée (10) et les embrayages de sortie (E1, E2), ledit carter (27) comportant une paroi interne (28) s'étendant axialement autour de l'axe X et comprenant un réseau de passage de fluide (80)
- et l'élément d'entrée de couple (2), un élément de calage axial (90a, 90b) étant interposé axialement entre la paroi interne (28) du carter de protection (27) ou l'élément d'entrée de couple d'une part et une face frontale (95) dudit palier axial (90) d'autre part,
- le dispositif comprend également au moins un autre palier axial (91, 92, 93, 94) présentant des faces frontales (95) configuré pour supporter les efforts axiaux du dispositif (1), et qu'il comprend aussi au moins un élément de calage axial (91 a, 91 b, 92a, 92b, 93a, 93b, 94a, 94b) en contact avec l'une des faces frontales (95) d'un palier axial (91, 92, 93, 94), où
- le palier axial (91) étant interposé axialement entre l'élément d'entrée de couple (2) et le premier élément de sortie de couple (6), l' élément de calage axial (91a, 91b) étant interposé axialement entre l'élément d'entrée de couple (2) ou le premier élément de sortie de couple (6) d'une part et une face frontale (95) dudit palier axial (91) d'autre part,
- le palier axial (92) étant interposé axialement entre le premier et deuxième élément de sortie de couple (6, 7), l' élément de calage axial (92a, 92b) étant interposé axialement entre le premier ou deuxième élément de sortie de couple (6, 7) d'une part et une face frontale (95) dudit palier axial (92) d'autre part.
- le palier axial (93) étant interposé axialement entre le deuxième élément de sortie de couple (7) et le moyeu principal (50), l' élément de calage axial (93a, 93b) étant interposé axialement entre le deuxième élément de sortie de couple (7) ou le moyeu principal (50) d'une part et une face frontale (95) dudit palier axial (93) d'autre part ou
- le palier axial (94) interposé entre un piston du premier embrayage de sortie (E1) et un carter de boite de vitesses.

2. Dispositif (1) de transmission de couple selon la revendication précédente, **caractérisé en ce que** l'au moins un palier axial (90, 91, 92, 93, 94) est une butée à aiguilles.

3. Dispositif (1) de transmission de couple selon l'une quelconque des revendications précédentes, **caractérisé en ce qu'**il comprend quatre paliers axiaux (90, 91, 92, 93).

4. Dispositif (1) de transmission de couple selon la revendication précédente, **caractérisé en ce que** lesdits quatre paliers axiaux (90, 91, 92, 93) sont disposés dans des épaulements de l'élément d'entrée de couple (2), du premier élément de sortie de couple (6) et du deuxième élément de sortie de couple (7).

5. Dispositif (1) de transmission de couple selon la revendication 1, **caractérisé en ce que** l'au moins un élément de calage axial (90a, 90b, 91a, 91b, 92a, 92b, 93a, 93b, 94a, 94b) chevauche radialement la paroi interne (28) du carter (27).

## Patentansprüche

1. Vorrichtung (1) zur Drehmomentübertragung, insbesondere für ein Kraftfahrzeug, umfassend:
- ein Drehmoment-Eingangselement (2), das um eine Achse X rotiert und geeignet ist, mit einer Kurbelwelle eines Verbrennungsmotors drehgekoppelt zu werden,
- ein erstes und ein zweites Drehmoment-Ausgangselement (6, 7), die geeignet sind, mit einer ersten bzw. einer zweiten Eingangswelle eines Getriebes drehgekoppelt zu werden,
- eine erste und eine zweite Ausgangskupplung (E1, E2), die zwischen dem Drehmoment-Eingangselement (2) und den Drehmoment-Ausgangselementen (6, 7) in der Richtung der Drehmomentübertragung angeordnet sind,
- einen Eingangslamellenträger (5), der den zwei Ausgangskupplungen (E1, E2) gemeinsam ist,
- eine Eingangskupplung (10), die das Drehmoment-Eingangselement (2) und den Eingangslamellenträger (5) selektiv und durch Reibung kuppelt,
- eine Hauptnabe (50),
- mindestens ein Axiallager (90), das Stirnflächen (95) aufweist und dafür ausgelegt ist, die axialen Kräfte der Vorrichtung (1) aufzunehmen,
**dadurch gekennzeichnet, dass** sie mindestens ein Element zur axialen Einstellung (90a, 90b) umfasst, das sich mit einer der Stirnflächen (95) des Axiallagers (90) in Kontakt befindet, wobei das mindestens eine Axiallager (90) :
- ein Axiallager (90) ist, das axial angeordnet ist zwischen:
- einer Innenwand (28) eines Schutzgehäuses (27), das dazu eingerichtet ist, das Drehmoment-Eingangselement (2), das erste und das zweite Drehmoment-Ausgangselement (6, 7), die Eingangskupplung (10) und die Ausgangskupplungen (E1, E2) wenigstens teilweise zu umhüllen, wobei das Gehäuse (27) eine Innenwand (28) aufweist, die sich axial um die Achse X herum erstreckt und ein Fluid-Durchgangsnetz (80) umfasst,
- und dem Drehmoment-Eingangselement (2), wobei ein Element zur axialen Einstellung (90a, 90b) axial zwischen der Innenwand (28) des Schutzgehäuses (27) oder dem Drehmoment-Eingangselement einerseits und einer Stirnfläche (95) des Axiallagers (90) andererseits angeordnet ist,
- die Vorrichtung außerdem mindestens ein weiteres Axiallager (91, 92, 93, 94) umfasst, das Stirnflächen (95) aufweist und dafür ausgelegt ist, die axialen Kräfte der Vorrichtung (1) aufzunehmen, und dass sie auch mindestens ein Element zur axialen Einstellung (91 a, 91 b, 92a, 92b, 93a, 93b, 94a, 94b) umfasst, das sich mit einer der Stirnflächen (95) eines Axiallagers (91, 92, 93, 94) in Kontakt befindet, wobei
- das Axiallager (91) axial zwischen dem Drehmoment-Eingangselement (2) und dem ersten Drehmoment-Ausgangselement (6) angeordnet ist, wobei das Element zur axialen Einstellung (91a, 91b) axial zwischen dem Drehmoment-Eingangselement (2) oder dem ersten Drehmoment-Ausgangselement (6) einerseits und einer Stirnfläche (95) des Axiallagers (91) andererseits angeordnet ist,
- das Axiallager (92) axial zwischen dem ersten und dem zweiten Drehmoment-Ausgangselement (6, 7) angeordnet ist, wobei das Element zur axialen Einstellung (92a, 92b) axial zwischen dem ersten oder zweiten Drehmoment-Ausgangselement (6, 7) einerseits und einer Stirnfläche (95) des Axiallagers (92) andererseits angeordnet ist,
- das Axiallager (93) axial zwischen dem zweiten Drehmoment-Ausgangselement (7) und der Hauptnabe (50) angeordnet ist, wobei das Element zur axialen Einstellung (93a, 93b) axial zwischen dem zweiten Drehmoment-Ausgangselement (7) oder der Hauptnabe (50) einerseits und einer Stirnfläche (95) des Axiallagers (93) andererseits angeordnet ist, oder
- das Axiallager (94) zwischen einem Kolben der ersten Ausgangskupplung (E1) und einem Getriebegehäuse angeordnet ist.

2. Vorrichtung (1) zur Drehmomentübertragung nach dem vorhergehenden Anspruch, **dadurch gekennzeichnet, dass** das mindestens eine Axiallager (90, 91, 92, 93, 94) ein Nadeldrucklager ist.

3. Vorrichtung (1) zur Drehmomentübertragung nach einem der vorhergehenden Ansprüche, **dadurch gekennzeichnet, dass** sie vier Axiallager (90, 91, 92, 93) umfasst.

4. Vorrichtung (1) zur Drehmomentübertragung nach dem vorhergehenden Anspruch, **dadurch gekennzeichnet, dass** die vier Axiallager (90, 91, 92, 93) in Ansätzen des Drehmoment-Eingangselements (2), des ersten Drehmoment-Ausgangselements (6) und des zweiten Drehmoment-Ausgangselements (7) angeordnet sind.

5. Vorrichtung (1) zur Drehmomentübertragung nach Anspruch 1, **dadurch gekennzeichnet, dass** das mindestens eine Element zur axialen Einstellung (90a, 90b, 91a, 91b, 92a, 92b, 93a, 93b, 94a, 94b) die Innenwand (28) des Gehäuses (27) radial überlappt.

## Claims

1. Torque transmission device (1), in particular for a motor vehicle, comprising:
- a torque input element (2), rotating about an axis X, that is able to be rotationally coupled to a crankshaft of a combustion engine,
- a first and a second torque output element (6, 7) that are able to be rotationally coupled to a first and a second input shaft, respectively, of a gearbox,
- a first and a second output clutch (E1, E2) that are arranged between the torque input element (2) and the torque output elements (6, 7) in the direction of torque transmission,
- an input disc carrier (5) common to the two output clutches (E1, E2),
- an input clutch (10), selectively and frictionally coupling the torque input element (2) and the input disc carrier (5),
- a main hub (50),
- at least one axial bearing (90) having frontal faces (95) and configured to support the axial loads of the device (1),
**characterized in that** it comprises at least one axial wedging element (90a, 90b) in contact with one of the frontal faces (95) of the axial bearing (90), the at least one axial bearing (90) being:
- an axial bearing (90) interposed axially between:
- an internal wall (28) of a protective casing (27) that is designed to at least partially envelop the torque input element (2), the first and second torque output element (6, 7), the input clutch (10) and the output clutches (E1, E2), said casing (27) having an internal wall (28) extending axially around the axis X and comprising a fluid passage network (80),
- and the torque input element (2), an axial wedging element (90a, 90b) being interposed axially between the internal wall (28) of the protective casing (27) or the torque input element on the one hand and a frontal face (95) of said axial bearing (90) on the other hand,
- the device also comprises at least one other axial bearing (91, 92, 93, 94) having frontal faces (95) and configured to support the axial loads of the device (1), and which device also comprises at least one axial wedging element (91a, 91b, 92a, 92b, 93a, 93b, 94a, 94b) in contact with one of the frontal faces (95) of an axial bearing (91, 92, 93, 94), wherein
- the axial bearing (91) being interposed axially between the torque input element (2) and the first torque output element (6), the axial wedging element (91a, 91b) being interposed axially between the torque input element (2) or the first torque output element (6) on the one hand and a frontal face (95) of said axial bearing (91) on the other hand,
- the axial bearing (92) being interposed axially between the first and second torque output element (6, 7), the axial wedging element (92a, 92b) being interposed axially between the first or second torque output element (6, 7) on the one hand and a frontal face (95) of said axial bearing (92) on the other hand,
- the axial bearing (93) being interposed axially between the second torque output element (7) and the main hub (50), the axial wedging element (93a, 93b) being interposed axially between the second torque output element (7) or the main hub (50) on the one hand and a frontal face (95) of said axial bearing (93) on the other hand, or
- the axial bearing (94) interposed between a piston of the first output clutch (E1) and a gearbox casing.

2. Torque transmission device (1) according to the preceding claim, **characterized in that** the at least one axial bearing (90, 91, 92, 93, 94) is a needle thrust bearing.

3. Torque transmission device (1) according to either one of the preceding claims, **characterized in that** it comprises four axial bearings (90, 91, 92, 93).

4. Torque transmission device (1) according to the preceding claim, **characterized in that** said four axial bearings (90, 91, 92, 93) are disposed in shoulders of the torque input element (2), of the first torque output element (6) and of the second torque output element (7).

5. Torque transmission device (1) according to Claim 1, **characterized in that** the at least one axial wedging element (90a, 90b, 91a, 91b, 92a, 92b, 93a, 93b, 94a, 94b) radially overlaps the internal wall (28) of the casing (27).
